(19) Europäisches Patentamt
European Patent Office
Office européen des brevets

(11) EP 4 814 903 A2

(12) EUROPEAN PATENT APPLICATION

(43) Date of publication:
**30.09.2026 Bulletin 2026/40**

(21) Application number: **26162466.2**

(22) Date of filing: **05.03.2026**

(51) International Patent Classification (IPC):
***G06V 20/68*** (2022.01) ***G06V 10/25*** (2022.01)
***G06V 10/82*** (2022.01) ***G06V 20/52*** (2022.01)

(52) Cooperative Patent Classification (CPC):
**G06V 20/68; G06V 10/25; G06V 10/26; G06V 10/82; G06V 20/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.03.2025 IN 202521030839**

(71) Applicant: **Tata Consultancy Services Limited**
**Mumbai, Maharashtra 400 021 (IN)**

(72) Inventors:
- **JUNAGADE, Sanket Kailas**
  **400601 Thane (IN)**
- **BOSE CHOUDHURY, Swagatam**
  **400601 Thane (IN)**
- **SARANGI, Sanat**
  **400601 Thane (IN)**
- **SINGH, Dineshkumar Jang Bahadur**
  **400601 Thane (IN)**
- **PAPPULA, Srinivasu**
  **500081 Hyderabad (IN)**

(74) Representative: **Goddar, Heinz J.**
**Boehmert & Boehmert**
**Anwaltspartnerschaft mbB**
**Pettenkoferstrasse 22**
**80336 München (DE)**

# (54) METHOD AND SYSTEM FOR REALTIME AUTOMATED GRADING OF TEA SHOOTS FOR QUALITY AND RESOURCE MANAGEMENT

(57) A method and system for real time automated grading of tea shoots for quality and resource management is disclosed. The method disclosed implements a multi-layer data fusion approach integrating RGB and spectral data of tea leaves for simultaneous morphological and chemical profiling. The method provides real-time detection of critical anomalies and an anomaly scoring mechanism. The method links real-time chemical profiling data with flavor prediction models and adjusts processing parameters based on target flavor profile. The method provides a dynamic worker compensation mechanism which includes real-time compensation to leaf quality metrics, incorporating post-segregation anomaly handling and rewarding performance based on output quality. The method allocates rejected leaves to optimized repurpose methods, minimizing waste and promoting sustainability. Thus, the method disclosed enables real-time tea leaf classification, flavor profile prediction, manufacturing optimization, dynamic worker compensation, waste management, and comprehensive reporting in tea manufacturing industry.

200
Segmenting a set of RGB images and a set of spectral images corresponding to a batch of tea leaves, to obtain a set of segmented RGB images and a set of segmented spectral images
202
Extracting a set of features comprising (i) a set of morphological features by processing the set of segmented RGB images, and (ii) a set of spectral features by applying a spectral reflectance extraction technique and a dimensionality reduction technique on the set of segmented spectral images
204
Selecting, via the one or more hardware processors, one or more feasible grades amongst a set of predefined grades based on a feasibility score calculated using (i) the set of features and (ii) a set of shoot classes relevant to tea manufacturing
206
Determining a flavor score for the one or more feasible grades based on (i) a set of flavor compounds, and (ii) a bitterness index calculated using one or more flavor compounds amongst the set of flavor compounds
208
Validating one or more final tea grades for a batch of processed-tea leaves, based on a Reinforcement Learning (RL) technique with a reward function, wherein the reward function is based on the flavor score, a pre-defined target flavor profile, and a user defined grade
210
Calculating a total worker compensation by correlating the set of features, a set of anomalies comprising (i) a set of pre-informed anomalies, and (ii) a set of uninformed anomalies, detected from the set of features, and a set of scoring rules
212
FIG. 2



Processed by Luminess, 75001 PARIS (FR)

## Description

CROSS-REFERENCE TO RELATED APPLICATIONS AND PRIORITY

The present application claims priority to Indian application no. 202521030839, filed on 29 March 2025.

TECHNICAL FIELD

The disclosure herein generally relates to precision agriculture technology, and, more particularly, to a method and system for real time automated grading of tea shoots for quality and resource management.

BACKGROUND

The tea manufacturing industry faces challenges related to quality control, efficiency, and sustainability. Traditional methods rely on manual inspections for tea leaf classification and quality assessment, which are subjective and prone to errors, leading to inconsistencies. Chemical profiling is typically performed through offline laboratory testing, delaying adjustments required to maintain desired flavor profiles and quality standards. Detection systems primarily use single-modality imaging, such as RGB cameras, which are insufficient for complex arrangements and varying conditions. This limitation extends to anomaly detection, where issues like pesticide residues, disease markers, and leaf-bud ratio deviations are often missed. Manufacturing processes use static parameters that fail to adapt to real-time variations in leaf quality or chemical composition, resulting in inefficiencies and increased waste.

Additionally, existing waste management systems in the tea manufacturing industry lack the precision needed for tracking and repurposing segregated leaves, leading to higher waste volumes and missed opportunities for resource optimization. The existing worker compensation systems do not adequately connect performance metrics to the quality of processed leaves, creating inequities and reducing motivation. Fragmented data systems further complicate operations by preventing integrated decision-making, while traditional reporting mechanisms are unable to provide actionable insights in real time. These challenges highlight the need for integrated technologies that address classification accuracy, real-time manufacturing optimization, effective waste management, and dynamic worker compensation.

SUMMARY

Embodiments of the present disclosure present technological improvements as solutions to one or more of the above-mentioned technical problems recognized by the inventors in conventional systems. For example, in one embodiment, a method for real time automated grading of tea shoots for quality and resource management is provided. The method includes segmenting a set of RGB images and a set of spectral images corresponding to a batch of tea leaves, captured via an RGB camera and a spectral camera for a pre-defined time interval. This is done by applying a first segmentation technique on the set of RGB images to obtain a set of segmented RGB images. And also, by applying at least (a) a second segmentation technique on a set of histogram-equalized spectral images to obtain a first subset of segmented spectral images amongst a set of segmented spectral images and (b) a third segmentation technique on the set of histogram-equalized spectral images to obtain a second subset of segmented spectral images amongst the set of segmented spectral images. Further the method includes, extracting a set of features comprising (i) a set of morphological features by processing the set of segmented RGB images, and (ii) a set of spectral features by applying a spectral reflectance extraction technique and dimensionality reduction techniques on the set of segmented spectral images. Furthermore, the method includes, selecting one or more feasible grades amongst a set of predefined grades based on a feasibility score calculated using (i) the set of features and (ii) a set of shoot classes relevant to tea manufacturing. Next the method includes, determining a flavor score for the one or more feasible grades based on (i) a set of flavor compounds, and (ii) a bitterness index calculated using one or more flavor compounds amongst the set of flavor compounds. Further the method includes, validating one or more final tea grades for a batch of processed tea, based on a Reinforcement Learning (RL) technique with a reward function. The reward function is based on the flavor score, a user-defined target flavor profile, and a user defined grade. Finally the method includes, calculating a total worker compensation by correlating the set of features, a set of anomalies comprising (i) a set of pre-informed anomalies, and (ii) a set of uninformed anomalies, detected from the set of features, and a set of scoring rules.

In another aspect, a system for real time automated grading of tea shoots for quality and resource management is provided. The system comprises memory storing instructions; one or more communication interfaces; and one or more hardware processors coupled to the memory via the one or more communication interfaces, wherein the one or more hardware processors are configured by the instructions to segment a set of RGB images and a set of spectral images corresponding to a batch of tea leaves, captured via an RGB camera and a spectral camera for a pre-defined time interval. This is done by applying a first segmentation technique on the set of RGB images to obtain a set of segmented RGB images

and. by applying at least (a) a second segmentation technique on a set of histogram-equalized spectral images to obtain a first subset of segmented spectral images amongst a set of segmented spectral images and (b) a third segmentation technique on the set of histogram-equalized spectral images to obtain a second subset of segmented spectral images amongst the set of segmented spectral images. Further the one or more hardware processors are configured by the instructions to extract a set of features comprising (i) a set of morphological features by processing the set of segmented RGB images, and (ii) a set of spectral features by applying a spectral reflectance extraction technique and dimensionality reduction techniques on the set of segmented spectral images. Furthermore, the one or more hardware processors are configured by the instructions to select one or more feasible grades amongst a set of predefined grades based on a feasibility score calculated using (i) the set of features and (ii) a set of shoot classes relevant to tea manufacturing. Next the system includes determining a flavor score for the one or more feasible grades based on (i) a set of flavor compounds, and (ii) a bitterness index calculated using one or more flavor compounds amongst the set of flavor compounds. Further the system includes validating one or more final tea grades for a batch of processed tea, based on a Reinforcement Learning (RL) technique with a reward function. The reward function is based on the flavor score, a user-defined target flavor profile, and a user defined grade. Finally the system includes, calculating total worker compensation by correlating the set of features, a set of anomalies comprising (i) a set of pre-informed anomalies, and (ii) a set of uninformed anomalies, detected from the set of features, and a set of scoring rules.

A segmented spectral image amongst the second subset of segmented spectral images is obtained by segmenting a spectral image amongst the set of spectral images using the third segmentation technique by performing an initial k-means clustering on a histogram-equalized spectral image corresponding to the spectral image to obtain a segmented mask of leaf region. Further a circular mask is applied on center of the segmented mask of leaf region to eliminate noisy edge distortion. A radius of the circular mask is calculated based on noisy edge identified after the initial k-means clustering. Then the circular mask is reapplied on the histogram-equalized spectral image while discarding the segmented mask of leaf region to obtain a clean histogram-equalized spectral image. Finally, Convolutional Neural Network (CNN)-based segmentation is performed on the clean histogram-equalized spectral image to obtain the segmented spectral image amongst the second subset of segmented spectral images.

The one or more hardware processors are configured by the instructions to identify, a set of disease symptoms from the set of segmented spectral images based on (i) a similarity metric and (ii) comparison between the set of segmented RGB images, and the set of segmented spectral images. This is done by identifying a first set of discrepancies indicating a set of hidden diseases using a similarity metric by comparing the first subset of segmented spectral images and the second subset of segmented spectral images. Further a second set of discrepancies is identified indicating a set of confirmed diseases using the similarity metric by comparing the set of segmented RGB images and the second subset of segmented spectral images. Finally the set of disease symptoms are identified by comparing the first set of discrepancies and the second set of discrepancies to determine severity of diseases.

The set of morphological features comprises a set of shoot types, a leaf count, a bud count, a set of shoot classes, and a set of disease markers. The set of spectral features comprising chemical data, moisture percentage, and reflectance value of spectral disease markers. The set of anomalies comprising a moisture deviation, a pesticide residue, a disease marker, an unwanted leaf-bud ratio, and broken leaf fragments, are detected from the batch of tea leaves using the set of features based on a normalized negative score comparison with a pre-defined threshold.

The normalized negative score for the set of anomalies in the batch of tea leaves is computed by assigning a pre-defined negative score for each anomaly amongst the set of anomalies. Then a total negative score for the set of anomalies is calculated by performing a summation of the pre-defined negative score for each anomaly. Next, the normalized negative score is obtained by dividing the total negative score by the leaf count. Finally, a count of batch of rejected tea leaves is determined by comparing the normalized negative score with the pre-defined threshold.

The feasibility score for a grade amongst the set of grades is calculated based on a leaf integrity match, a tip criterion match, a fine coarse match, a pesticide residue level in the batch of tea leaves, a disease severity index in the batch of tea leaves and a set of weighting factors. The leaf integrity match represents a value of one if the leaf integrity of the batch of tea leaves exceeds a pre-defined threshold. The tip criterion match represents a value of one if the bud ratio of the batch of tea leaves is sufficient for a flowery grade. The fine coarse match represents a value of one if the set of shoot classes aligns with a set of requirements of the grade.

A final tea grade for each leaf based on the RL technique by generating the reward function proportional to a match between the flavor score and the user-defined target flavor profile. Then the set of anomalies are penalized above a pre-defined threshold. Finally, at least one manufacturing parameter is adjusted based on the RL agent's policy to optimize quality of the batch of tea leaves.

A total waste for the pre-defined time interval is calculated based on the count of batch of rejected tea leaves and a factory infrastructure identified using the set of features if the set of anomalies are detected. This is done by classifying the batch of rejected tea leaves to at least one anomaly amongst the set of anomalies. Then at least one anomaly is mapped to a repurposing path of the factory infrastructure. Further return on investment (ROI) is calculated from historical data comprising resource usage, disposal costs and revenue and a set of existing repurposing paths. Finally, if the ROI is

greater than the user defined ROI threshold, a new repurposing path is suggested for the mapped repurposing path to calculate the total waste.

In yet another aspect, there is provided a computer program product comprising a non-transitory computer readable medium having a computer readable program embodied therein, wherein the computer readable program, when executed on a computing device causes the computing device for real time automated grading of tea shoots for quality and resource management is provided. The computer readable program includes segmenting a set of RGB images and a set of spectral images corresponding to a batch of tea leaves, captured via an RGB camera and a spectral camera for a pre-defined time interval. This is done by applying a first segmentation technique on the set of RGB images to obtain a set of segmented RGB images. And also, by applying at least (a) a second segmentation technique on a set of histogram-equalized spectral images to obtain a first subset of segmented spectral images amongst a set of segmented spectral images and (b) a third segmentation technique on the set of histogram-equalized spectral images to obtain a second subset of segmented spectral images amongst the set of segmented spectral images. Further the computer readable program includes extracting a set of features comprising (i) a set of morphological features by processing the set of segmented RGB images, and (ii) a set of spectral features by applying a spectral reflectance extraction technique and dimensionality reduction techniques on the set of segmented spectral images. Furthermore, the computer readable program includes selecting one or more feasible grades amongst a set of predefined grades based on a feasibility score calculated using (i) the set of features and (ii) a set of shoot classes relevant to tea manufacturing. Next the computer readable program includes, determining a flavor score for the one or more feasible grades based on (i) a set of flavor compounds, and (ii) a bitterness index calculated using one or more flavor compounds amongst the set of flavor compounds. Further the computer readable program includes validating one or more final tea grades for a batch of processed tea, based on a Reinforcement Learning (RL) technique with a reward function. The reward function is based on the flavor score, a user-defined target flavor profile, and a user defined grade. Finally the computer readable program includes calculating a total worker compensation by correlating the set of features, a set of anomalies comprising (i) a set of pre-informed anomalies, and (ii) a set of uninformed anomalies, detected from the set of features, and a set of scoring rules.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for real time automated grading of tea shoots for quality and resource management according to some embodiments of the present disclosure.

FIG.2 is an exemplary flow diagram illustrating a method for real time automated grading of tea shoots for quality and resource management according to some embodiments of the present disclosure.

FIG.3A through FIG.3E illustrates example images from a third segmentation technique for an original image, a histogram equalized images, initial clustering segmented image, a circular mask with target radius on the histogram equalized image, and the final segmented image according to some embodiments of the present disclosure.

FIG. 4A through FIG. 4D illustrates an example ground truth RGB image, and example resultant images after applying the first segmentation technique, the second segmentation technique, and the third segmentation technique.

## DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The tea industry faces significant challenges in maintaining consistent product quality due to the reliance on traditional manual inspections, which are prone to human error and variability. Key issues include inaccurate classification of tea leaves, difficulty in detecting defects like pesticide residues or disease markers, inefficiencies in manufacturing processes, and ineffective waste management practices. Additionally, the lack of real-time chemical profiling often leads to deviations in target flavor profiles, impacting product quality. Worker compensation systems also struggle to fairly reward performance based on leaf quality and output.

Embodiments of the present disclosure provide a method for real time automated grading of tea shoots for quality and resource management. The method disclosed integrates RGB images and spectral images of a batch of tea leaves

with artificial intelligence (AI) based classification algorithms for accurate tea leaf analysis. Specifically, RGB and spectral imaging data are simultaneously processed to analyze both morphological and chemical properties in a single workflow, thereby reducing human error and variability in classification. Unlike traditional isolated inspection methods, the system utilizes real-time chemical profiling that is directly linked with RGB-based morphological classification, ensuring a comprehensive quality assessment. Dual-confirmation methods synchronize RGB and spectral results, ensuring precise detection of defects such as pesticide residues, disease markers, and incorrect leaf-bud ratios. Real-time chemical profiling, coupled with dual-confirmation methods, ensures precise detection of defects, such as pesticide residues, disease markers, and incorrect leaf-bud ratios. The disclosed method also optimizes manufacturing processes by establishing a direct link between chemical profiling to flavor prediction models. This enables real-time, dynamic adjustments to processing parameters, such as but not limited to withering, drying, and oxidation, ensuring batch consistency and adherence to target flavor profiles. The integration between classification, defect detection, and process control subsystems allows automated decision-making at each stage of tea processing. It incorporates dynamic real-time waste tracking and anomaly-driven repurposing strategies, utilizing existing factory resources by categorizing moisture-rich waste, pesticide-affected leaves, and tannin-rich material into specific processing streams such as composting, bioenergy conversion, or chemical extraction to minimize waste effectively. In the disclosed method, worker compensation is linked to real-time leaf quality metrics, ensuring equitable and performance-driven rewards without requiring separate manual validation. A centralized comprehensive reporting dashboard aggregates and visualizes real-time data from classification, chemical profiling, manufacturing optimizations, worker performance, and waste management, ensuring holistic, data-driven operational control. Thus, this fully integrated system enhances product quality, operational efficiency, and sustainability in tea manufacturing.

The present disclosure introduces a comprehensive and integrated system that fundamentally redefines tea manufacturing optimization by establishing a unified, real-time data exchange between grading, defect detection, and process control subsystems. Unlike existing solutions that analyze morphology and chemical composition separately, this present method disclosed synchronizes RGB images and spectral images to enable simultaneous morphological and chemical profiling, achieving a functionality which is not present in prior art. Existing methods focus separately on image-based morphological analysis or chemical profiling using spectroscopy, whereas the present disclosure introduces spectral imaging integration to detect anomalies such as moisture deviations, pesticide residues, and diseases while classifying leaves by type and quality.

The present disclosure also integrates physical grade segregation of tea leaves with flavor profile prediction and manufacturing process optimization. The disclosure ensures both quality and efficiency are maintained throughout the production by linking chemical profiling and comprehensive leaf classification including categorization into whole leaf, broken leaf, and fannings or dust grades to real-time adjustments in processing parameters. Unlike prior systems that rely solely on static chemical composition analysis or separate grading processes, the present disclosure dynamically recommends processing changes (e.g., withering, drying) based on predictive algorithms using real-time data. Additionally, the inclusion of a feedback loop continuously refines both grade classifications and process optimizations as production progresses, creating a closed-loop system that departs entirely from the static and disconnected methods of existing technologies.

The present disclosure also integrates dynamic worker compensation, waste management, and comprehensive reporting, functionalities which are not present in prior systems. Existing methods lack mechanisms to link worker compensation to classified leaf quality or account for anomalies segregated at earlier stages. The disclosure ensures fairness by compensating workers based on their handling of post-screened leaves, while also repurposing substandard leaves into secondary products to address waste management challenges. The centralized reporting dashboard consolidates real-time data on classification, anomalies, worker performance, and sustainability metrics, creating a unified decision-making platform that goes beyond the isolated functionalities of prior systems.

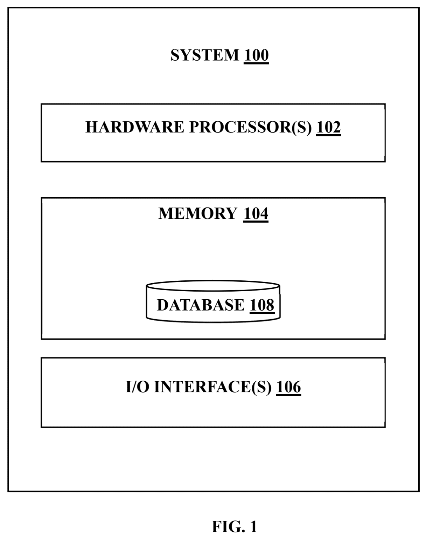

Referring now to the drawings, and more particularly to FIG. 1 through FIG. 4D, where similar reference characters denote corresponding features consistently throughout the figures, there are shown preferred embodiments and these embodiments are described in the context of the following exemplary system and/or method.

FIG. 1 illustrates an exemplary block diagram of a system 100 for real time automated grading of tea shoots for quality and resource management according to some embodiments of the present disclosure. **In** an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules, such as a segmentation module (not shown), a feature extraction module (not shown), a feasible grading module (not shown), a worker compensation module (not shown), a waste management module (not shown) and the like. Further, the plurality of modules includes programs or coded instructions that supplement applications or functions performed by the system 100 for executing different steps involved in the process for real time automated grading of tea shoots by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof.

Further, the memory 104 may include a database 108 or repository. The memory 104 may comprise information pertaining to input(s)/output(s) of each step performed by the processor(s) 102 of the system 100 and methods of the present disclosure. In an embodiment, the database 108 may be external to the system 100 and coupled via the I/O interface 106. The database may include a relational database and so on.

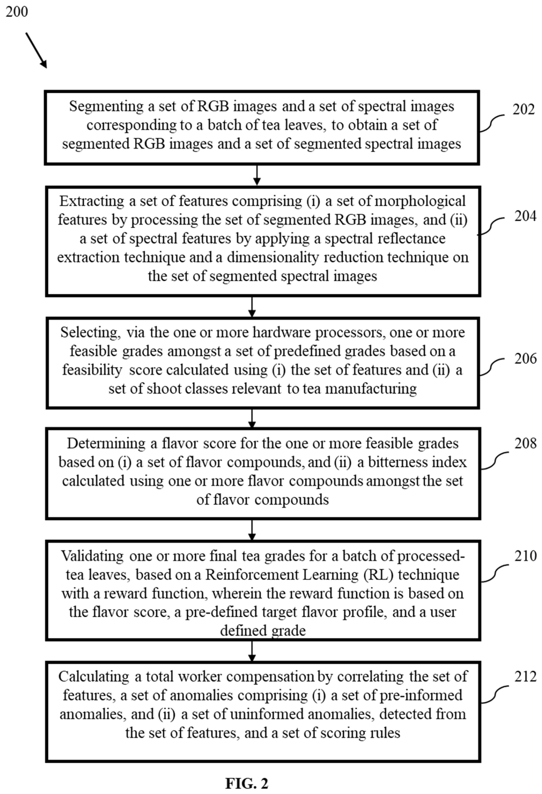

FIG. 2 is an exemplary flow diagram illustrating a method 200 for real time automated grading of tea shoots for quality and resource management according to some embodiments of the present disclosure. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1, and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the method blocks described can be combined in any order to implement the method 200, or an alternative method. Furthermore, the method 200 can be implemented in any suitable hardware, software, firmware, or combination thereof.

Now referring to FIG. 2, at step 202 of the method 200, one or more hardware processors 102 are configured to segment a set of RGB images and a set of spectral images corresponding to a batch of tea leaves using the segmentation module. These RGB images and the spectral images are captured via an RGB camera and a spectral camera respectively for a pre-defined time interval. Both cameras are mounted at the same height, side by side, to maintain a consistent field of view, enabling efficient data fusion where needed. High-resolution RGB cameras are used to capture morphological details. These cameras focus on physical attributes and visible markers crucial for real-time tea leaf analysis. Spectral cameras operate across a wide wavelength range (400-2500 nm) to analyze chemical and structural properties of tea leaves. The capability of spectral cameras to capture hyperspectral, multispectral, and spectral imaging data enables in-depth chemical profiling. To maintain imaging accuracy, the system 100 employs a controlled lighting setup that minimizes external light interference and shadows. This ensures consistent illumination based on fluorescent lighting across all samples, critical for both RGB and spectral data accuracy. Before performing segmentation on the RGB images and the spectral images an object detection model and a set of preprocessing techniques are applied respectively. For RGB images the object detection model is applied which locates bounding regions of tea leaves. The output after applying the object detection model are regions of interests which is used further for segmentation. Also, the set of preprocessing techniques are applied on the spectral images such as grey scale conversion, gaussian blur, and histogram equalization. The grey scale conversion is applied to convert each spectral band image to grayscale, emphasizing intensity. The gaussian blur is used to reduce random noise and sharp edges for more accurate segmentation. Histogram equalization redistributes pixel intensity values, enhancing subtle spectral features.

Further a first segmentation technique is applied on the set of RGB images to obtain a set of segmented RGB images in the segmentation module. Here, using bounding boxes from the object detection step as mentioned previously, each tea leave from the batch of tea leaves is isolated. Each tea leaves and bud are segmented via Convolutional Neural

Network (CNN) based methods. From this leaf-bud ratio is determined. From the first segmentation technique full leaf or broken leaf is determined. Also, using the CNN based classification visible disease symptoms such as discoloration, spots and the like are detected.

Also, a second segmentation technique and a third segmentation technique are applied on the set of histogram-equalized spectral images to obtain a set of segmented spectral images in the segmentation module. A second segmentation technique is applied on the set of histogram-equalized spectral images to obtain a first subset of segmented spectral images amongst the set of segmented spectral images. A third segmentation technique is applied on the set of histogram-equalized spectral images to obtain a second subset of segmented spectral images amongst the set of segmented spectral images. The second segmentation technique is applied with an initial k-means clustering for differentiating tea leaves from background based on spectral intensity. Further a circular mask is applied to discard edge noise. Further a refined k-means clustering is performed as a second pass to reduce spectral noise, resulting in a clean segmented region to obtain the first subset of segmented spectral images.

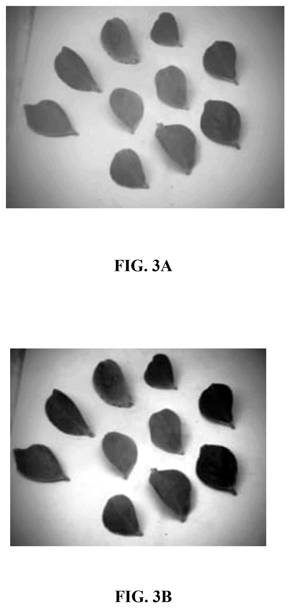

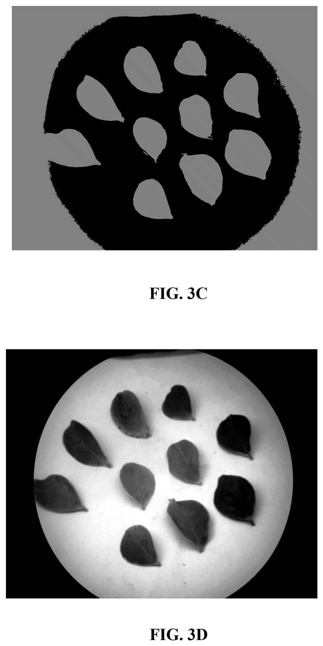

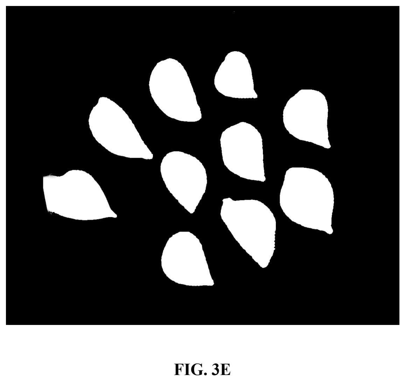

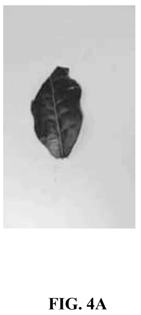

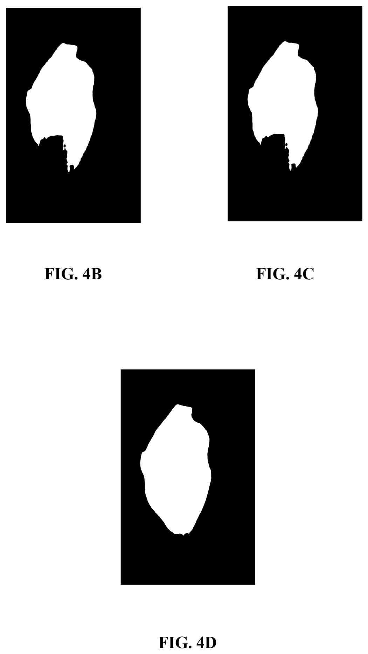

The third segmentation technique is applied to the set of histogram-equalized spectral images. A segmented spectral image amongst the second subset of segmented spectral images is obtained by first performing an initial k-means clustering on a histogram-equalized spectral image corresponding to the spectral image to obtain a segmented mask of leaf region. This separates leaves (foreground) from background via spectral intensity on the histogram-equalized spectral image. Further a circular mask is applied on the center of the segmented mask of leaf region. The radius of the circular mask is calculated based on noisy edge identified after the initial k-means clustering. This eliminates edge distortions (e.g., lens vignetting) by focusing on the central region. This step is crucial as the peripheral regions of spectral images are prone to spectral noise and distortions, which act as blind spots for chemical analysis. Hence, spectral profiling is limited only to high-integrity regions, while morphological analysis may still reference edge areas when necessary. Then the circular mask is reapplied to the histogram-equalized spectral image while discarding the segmented mask of leaf region to obtain a clean histogram-equalized spectral image. Then CNN-based segmentation is performed on the clean histogram-equalized spectral image to obtain the segmented spectral image amongst the second subset of segmented spectral images. The segmented spectral image enables precise identification of tea leaves, wherein bounding boxes are generated that highlight specific tea leaf areas for further analysis. FIG.3A through FIG.3E illustrates example images from a third segmentation technique for an original image, a histogram equalized images, initial clustering segmented image, a circular mask with target radius on the histogram equalized image, and the final segmented image according to some embodiments of the present disclosure. FIG. 3A is an example of the original image of a tea leaves on which the third segmentation technique is applied. FIG.3B is the histogram equalized image of FIG.3A. FIG. 3C is the resultant image after applying the initial clustering technique. FIG. 3D is the circular mask with target radius applied on the histogram equalized image. FIG. 3E is the final segmented image of the original image as in FIG. 3A after applying the third segmentation technique. FIG. 4A illustrates an example of ground truth RGB image. FIG. 4B is an example resultant image after applying the first segmentation technique, FIG. 4C is an example resultant image after applying the second segmentation technique and FIG. 4D is an example resultant image after applying the third segmentation technique. It is noted that spectral imaging near the edges of the field-of-view often exhibits consistent spectral noise, limiting reliable chemical profiling in those regions. Therefore, the system 100 constrains spectral analysis to central regions, while morphological analysis may still be performed across the full frame. The present disclosure enables multi-level segmentation for predicting diseases in tea leaves. However, it is to be noted that the steps for multi-level segmentation can be used in detecting diseases in other crops.

Once the multi-level segmentation is performed, then at step 204 of the method 200, one or more hardware processors 102 are configured to extract a set of features which comprises (i) a set of morphological features, and (ii) a set of spectral features using the feature extraction module. The set of morphological features are extracted by processing the set of segmented RGB images. The set of spectral features are extracted by applying a spectral reflectance extraction technique and dimensionality reduction techniques on the set of segmented spectral images. These techniques may include, but are not limited to, Principal Component Analysis (PCA), t-distributed Stochastic Neighbor Embedding (t-SNE), Uniform Manifold Approximation and Projection (UMAP), Linear Discriminant Analysis (LDA), Autoencoders, Independent Component Analysis (ICA), Genetic Algorithms (GA), and other optimization-based feature selection methods. The set of morphological features comprises a set of shoot types, a leaf count, a bud count, a set of shoot classes, and a set of disease markers (e.g., red spider mites). The set of spectral features comprises chemical data, moisture percentage, and reflectance value of spectral disease markers. The definitions of shoot types, leaf-bud thresholds, and disease marker severity levels are factory-calibrated based on local crop standards and grading requirements.

A reflectance value of the spectral disease markers is obtained by performing bounding box analysis, wherein spectral reflectance values from regions defined by bounding boxes are extracted. They are typically created from the third segmentation technique. Bounding boxes isolate regions of interest on the tea leaves, ensuring consistency and accuracy in the extracted spectral data. Then the average intensity values across different wavelengths is computed to capture detailed chemical properties. Pixel locations of bounding boxes are superimposed onto the raw spectral data to derive precise reflectance values. This step ensures reflectance measurements are corrected for variations such as noise or lens

artifacts, providing reliable indicators of chemical composition (e.g., tannins, catechins, and pesticide residues). The dimensionality of the extracted spectral reflectance features is reduced while retaining significant variations in the data. Dimensionality reduction techniques transforms the high-dimensional data into a smaller set of principal components, preserving essential information for further analysis. This dimensionality reduction ensures that only the most critical features are retained, enabling efficient processing and minimizing computational overhead without compromising accuracy. Spectral data is categorized into 4 time-based classes corresponding to the aging and differentiates tea leaves based on chemical quality. These classes are Subclass A (Day 1-2), Subclass B (Day 3-4), Subclass C (Day 5-6), and Subclass D (Day 7+).

Day 1-4: represent fine leaves with high moisture levels, robust tannin and catechin content, and superior chemical activity. These are ideal for premium tea production. Day 4 and above: represent coarse leaves with reduced moisture, diminished chemical activity, and thicker, rougher textures. These are typically suited for lower-grade tea production.

The system 100 utilizes a dual confirmation mechanism to identify a set of disease symptoms from the set of segmented spectral images based on (i) a similarity metric and (ii) comparison between the set of segmented RGB images, and the set of segmented spectral images. For this a first set of discrepancies indicating a set of hidden diseases is identified using a similarity metric by comparing the first subset of segmented spectral images and the second subset of segmented spectral images. The first subset of segmented spectral images and the second subset of segmented spectral images are compared at multiple wavelengths using Structural Similarity Index (SSIM) or a deep learning-based approach. Alternate or future-compatible approaches for anomaly detection, such as transformer-based models, unsupervised clustering, or hybrid fusion networks, may be used if they fulfill equivalent confirmation accuracy. A second set of discrepancies indicating a set of confirmed diseases are identified using the similarity metric by comparing the set of segmented RGB images and the second subset of segmented spectral images. The set of disease symptoms are identified by comparing the first set of discrepancies and the second set of discrepancies to determine severity of diseases.

Several parameter values are derived from the set of features extracted. These are explained in henceforth,

1. Shoot type ratios:

$$R_{shoot-type} = \frac{N_{type}}{N_{total}} \quad (1)$$

where, $N_{type}$ is count of leaves for a specific type, $N_{total}$ is total number of leaves in the batch. This ratio indicates the proportion of each leaf type within the batch, ensuring compliance with tea grading standards. The leaf types are,

a) 1 leaf +1 bud
b) 2 leaves+1 bud
c) 3 leaves+1 bud
d) 4 leaves+1 bud
e) 5 leaves+1 bud
f) 1-Banji
g) 2-Banji
h) 3-Banji
i) 4-Banji
j) Single leaf

2. Leaf-bud ratio for complete batch:
This ratio provide a comprehensive view of the balance between leaves and buds within the batch:

Leaf-Bud Ratio tracks the overall balance of leaves to buds, and is represented as below formula,

$$R_{leaf-bud,batch} = \frac{L_{total}}{B_{total}} \quad (2)$$

Bud-Leaf Ratio (Tip Presence) indicates the proportion of buds relative to leaves, offering insight into the prominence of buds (tips) in the batch, which can be a critical quality parameter for certain products. Formula for bud-leaf ratio (tip presence) is given as below,

$$R_{bud-leaf,batch} = \frac{B_{total}}{L_{total}} \quad (3)$$

where, $B_{total}$ is the total number of buds in the entire batch, $L_{total}$ is the total number of leaves in the entire batch.

3. Moisture Levels by Shoot Type and Total Batch:

This ensures moisture levels are consistent across all leaves and within the acceptable range for both individual leaf types and the entire batch.
This is represented as,

$$M_{type} = \frac{M_{observed,type} - M_{min}}{M_{max} - M_{min}} \quad (4)$$

$$M_{batch} = \frac{\sum M_{observed,type} \times N_{type}}{N_{total}} - \frac{M_{min}}{M_{max} - M_{min}} \quad (5)$$

where, $M_{observed,type}$ is the moisture observed in type of leaf, $M_{max}$ is maximum moisture in batch of tea leaves, $M_{min}$ is minimum moisture in batch of tea leaves.

4. Pesticides Residues by Shoot Type and Total Batch:

This monitors pesticide residue levels for each leaf type and the overall batch.
Values exceeding thresholds trigger compliance alerts.
This is represented as,

$$P_{type} = \frac{P_{observed,type}}{P_{threshold}} \quad (6)$$

$$P_{batch} = \frac{\sum P_{observed,type} \times N_{type}}{N_{total} \times P_{threshold}} \quad (7)$$

where, $P_{observed,type}$ is the pesticide residue level for each type of leaf, $P_{threshold}$ is the pesticide residue level threshold, $\Sigma\, P_{observed,type}$ is the total pesticide residue level for all leaf types.

5. Diseases Severity by Shoot Type and Total Batch:

This quantifies the proportion of diseased leaves within each leaf type and provides an aggregated view for the entire batch.
This is represented as,

$$D_{type} = \frac{D_{affected,type}}{D_{total,type}} \quad (8)$$

$$D_{batch} = \frac{\sum D_{affected,type}}{\sum D_{total,type}} \quad (9)$$

where, $D_{affected,type}$ is detected disease of leaf type, $D_{total,type}$ is total detected diseases of type of leaf.

6. Shoot Classification (Fine vs. Coarse with Subclasses) by Shoot Type and Total Batch:

This categorizes leaves as fine or coarse, both at the leaf type level and for the entire batch. This is represented as,

$$R_{fine-coarse,type} = \frac{N_{fine,type}}{N_{total,type}} \quad (10)$$

$$R_{fine-coarse,batch} = \frac{\sum N_{fine,type}}{N_{total}} \quad (11)$$

Where, $N_{fine,type}$ is number of leaf type classified as fine, $N_{total,type}$ is total number of leaf types, $\Sigma N_{fine,type}$ is total number of leaf types in the batch of tea leaves classified as fine.

Further it is subdivided into subclasses:

- Fine (Days 1-4):

- Subclass A (Day 1-2): High tannin, catechin, and optimal moisture
- Subclass B (Day 3-4): Moderate tannin, catechin, and acceptable moisture

• Coarse (Day 4+):

- Subclass C (Day 5-6): Lower tannin, catechin, suitable for standard production.
- Subclass D (Day 7+): Minimal chemical activity, suitable for lower-grade production.

7. Chemical Composition by Shoot Type and Total Batch:
This estimates key chemical compounds such as caffeine, tannin, and catechin for each leaf type and aggregates these values for the entire batch.

$$C_{type} = \frac{Chemicalcomposition(type)}{Chemicalthreshold} \quad (12)$$

$$C_{batch} = \frac{\Sigma(Chemicalcomposition(type) \times N_{type}}{N_{total} \times Chemicalthreshold} \quad (13)$$

8. Leaf Integrity by Shoot Type and Total Batch:

This measures the proportion of full leaves and broken leaves both at the leaf type level and for the entire batch. It ensures a quality balance of intact leaves in production.

$$I_{fullleaf,type} = \frac{N_{fullleaf,type}}{N_{totalleaf,type}} \quad (14)$$

$$I_{brokenleaf,type} = \frac{N_{brokenleaf,type}}{N_{totalleaf,type}} \quad (15)$$

$$I_{batch} = \frac{\Sigma N_{fullleaf,type}}{\Sigma N_{totalleaf,type}}, \frac{\Sigma N_{brokenleaf,type}}{\Sigma N_{totalleaf,type}} \quad (16)$$

where, $N_{fullleaf,type}$ is number of full leaves with type of leaf, $N_{totalleaf,type}$ is the total number of leaves with type of leaf, $N_{brokenleaf,type}$ is number of broken leaves with type of leaf, $\Sigma N_{fullleaf,type}$ is number of full leaves with type of leaf in batch of tea leaves, $\Sigma N_{brokenleaf,type}$ is number of broken leaves with type of leaf in batch of tea leaves.

Once feature extraction is performed, at step 206 of the method 200, one or more hardware processors 102 are configured to select one or more feasible grades amongst a set of predefined grades based on a feasibility score calculated using (i) the set of features and (ii) a set of shoot classes relevant to tea manufacturing in the feasible grading module. The step 206 can be better understood by way of examples provided below. For example thresholds for six potential grades, two each from Whole Leaf, Broken Leaf, and Fannings/Dust are considered. In practice, these criteria are factory defined and can be more extensive.

1. Whole Leaf Grades

a. OP (Orange Pekoe)

- Leaf Integrity: $I_{fullleaf,type} \geq 80\%$ (i.e., large, unbroken leaves).

- Pesticide Residue $P_{batch} \leq 1.0$.
- Disease Severity $D_{batch} \leq 0.3$.
- Leaf-Bud Ratio suitable for standard premium tea (e.g., ≥ 2:1 overall).

b. FOP (Flowery Orange Pekoe)

- Leaf Integrity ≥ 90%.
- Pesticide Residue $P_{batch} \leq 0.9$.
- Disease Severity $D_{batch} \leq 0.2$.
- Tip Presence: A certain fraction of buds/tips is required (e.g., ≥ 0.15 fraction of tips).

2. Broken Leaf Grades

a. BOP (Broken Orange Pekoe)

- Leaf Integrity in a moderate range (40-70% intact; rest broken).
- Pesticide Residue $P_{batch} \leq 1.2$.
- Disease Severity $D_{batch} \leq 0.4$.

b. FBOP (Flowery Broken Orange Pekoe)

- Leaf Integrity ≈ 50-75% but with some tips present.
- Pesticide Residue $P_{batch} \leq 1.0$.
- Disease Severity $D_{batch} \leq 0.3$.

3. Fannings & Dust

a. PF (Pekoe Fannings)

- Leaf Integrity: Typically, smaller leaf particles (only ~15-30% intact leaves).
- Pesticide Residue $P_{batch} \leq 1.5$.
- Disease Severity $D_{batch} \leq 0.5$.

b. Dust

- Leaf Integrity: Almost no intact leaves; very fine particles.
- Pesticide Residue $P_{batch} \leq 1.8$.
- Disease Severity $D_{batch} \leq 0.6$.

The feasibility score for a grade amongst the set of grades is calculated based on a leaf integrity match, a tip criterion match, a fine coarse match, a pesticide residue level in the batch of tea leaves, a disease severity index in the batch of tea leaves, and a set of weighting factors, wherein these thresholds and weights are factory-calibrated to match product standards and operational goals. $\Gamma_g$ is defined as follows,

$$\Gamma_g = \alpha_1.LeafIntegrityMatch(g) + \alpha_2.TipCriterionMatch(g) + \alpha_3.FineCoarseMatch(g) - \beta_1.P_{batch} - \beta_2.D_{batch} + \cdots \quad (17)$$

where:

- *LeafIntegrityMatch*(*g*) = 1 if the batch's leaf integrity meets or exceeds grade g's threshold, else 0.
- *TipCriterionMatch*(*g*) = 1 if the bud/tip ratio is sufficient for a flowery grade, else 0.
- *FineCoarseMatch*(*g*) = 1 if the batch's fine/coarse classification aligns with grade g's requirements, else 0.
- $P_{batch}$ is the pesticide residue level in the batch.
- $D_{batch}$ is the disease severity index in the batch.
- $\alpha_1$, $\alpha_2$, $\alpha_3$ are positive weighting factors for matching criteria.
- $\beta_1$, $\beta_2$ are positive weighting factors that penalize high pesticide residue and disease severity.

A grade g is feasible if $\Gamma_g \geq \Gamma_{min}$, a minimum feasibility threshold.
Here, $\Gamma_g$ for each candidate grade g is computed, incorporating fine and coarse leaf classification. Then filter out grades where $\Gamma_g \geq \Gamma_{min}$. Select at least one feasible grade from each major category (Whole Leaf, Broken Leaf, Fannings/Dust) if available. Further, the selected options of the feasible grades are communicated to the user via an Large Language Model (LLM)-based interface. The user can confirm the recommended grades or request additional or alternative grades. In scenarios where multiple grades yield identical feasibility scores, the system applies a fallback policy that prioritizes grades based on factory-preference hierarchies, or selects the grade associated with the highest expected flavor score to break ties.

Further at step 208 of the method 200, one or more hardware processors 102 are configured to determine a flavor score for the one or more feasible grades based on (i) a set of flavor compounds, and (ii) a bitterness index calculated using one or more flavor compounds amongst the set of flavor compounds. The flavor score is factory-calibrated based on chemical profiles aligned with desired product taste characteristics and may be periodically adjusted by expert inputs or sensory panels. Here how the tea's taste and aroma will evolve under different parameters, including caffeine, tannins, and additional chemicals, with an extensible design for future chemicals is predicted using the flavor score. The flavor score F extends to include caffeine, tannins, Theobromine, Theophylline, L-theanine, Gallic acid, Malic acid, Citric acid, Chlorophyll, Carotenoids. The flavor score is represented as,

$$F = w_{tf} \cdot TF + w_{th} \cdot Thearubigins + w_{cat} \cdot Catechins + w_{caf} \cdot Caffeine + w_{tan} \cdot Tannins + w_{theob} \cdot Theobromine + w_{theoph} \cdot Theophylline + w_{lt} \cdot L - theanine + w_{gal} \cdot GallicAcid + w_{mal} \cdot MalicAcid + w_{cit} \cdot CitricAcid + w_{chl} \cdot Chlorophyll + w_{car} \cdot Carotenoids + \sum_{i \in FUTURE} w_i . Chem_i - \alpha \cdot BitternessIndex \quad (18)$$

where TF, Thearubigins, Catechins, Caffeine, Tannins, Theobromine, Theophylline, L-theanine, Gallic Acid, Malic Acid, Citric Acid, Chlorophyll, Carotenoids come from the physical analysis of the batch,
$Chem_i$ represents any future chemical compound the user may add, $w_{tf}, w_{th}, w_{cat}, w_{caf}, w_{tan}, w_{theob}, w_{theoph}, w_{lt}, w_{gal}, w_{mal}, w_{cit}, w_{chl}, w_{car}$, $w_i$ are user-configurable weights, and $\alpha$ penalizes unwanted bitterness.

The bitterness index quantifies the overall bitterness of the tea based on its chemical composition. It is calculated using the concentrations of bitterness-contributing compounds, including Catechins, Caffeine, and Tannins. The bitterness index is represented as,

$$BitternessIndex = \beta_{cat} \cdot Catechins + \beta_{caf} \cdot Caffeine + \beta_{tan} \cdot Tannins \quad (19)$$

where Catechins, Caffeine, Tannins are the concentrations of these compounds from the physical analysis of the batch, $\beta_{cat}$, $\beta_{caf}$, $\beta_{tan}$ are weighting factors representing the relative contribution of each compound to bitterness. These weights can be calibrated based on sensory analysis or empirical data. The system 100 integrates new chemical $Chem_j$ while handling future chemicals. For this, the influence of $Chem_j$ is determined on flavor and bitterness through laboratory analysis. A weight $w_j$ is assigned based on empirical data or sensory evaluation. Then $Chem_j$ is incorporated into the flavor score as shown in equation 18. Further tests are conducted to ensure the updated model accurately reflects flavor changes.

The system 100 detects a set of anomalies from the batch of tea leaves using the set of features based on a normalized negative score comparison with a pre-defined threshold. The set of anomalies are moisture deviation, a pesticide residue, a disease marker, an unwanted leaf-bud ratio, and broken leaf fragments. The set of anomalies are defined as below:

1. Moisture Deviation are detected if leaves have below 72% moisture. They are detected via the second segmentation technique or the third segmentation technique on the spectral data.
2. Pesticide Residues are identified via abnormal spectral signatures.
3. Disease Markers are identified using RGB images and spectral images. Valid disease detection requires correlation between RGB and spectral evidence.
4. Unwanted Leaf-Bud Ratio. An example for this anomaly is shoots with 5 leaves + 1 bud flagged for mismatch in

standards. These are determined via the first segmentation technique
5. Broken Leaf Fragments are fragments of single leaves or buds, or partially major damaged leaves.

The normalized negative score for the set of anomalies in the batch of tea leaves is computed by first assigning a pre-defined negative score for each anomaly amongst the set of anomalies. Then a total negative score for the set of anomalies is calculated by performing a summation of the pre-defined negative score for each anomaly. Further the normalized negative score is obtained by dividing the total negative score by the leaf count. Finally a count of batch of rejected tea leaves are determined by comparing the normalized negative score with the pre-defined threshold. To calculate the normalized negative score for the set of anomalies in the batch of tea leaves, the following formula is used,

$$Normalizednegativescore = \left(\frac{\sum_{i=1}^{n} S_i}{T}\right) \times 100 \qquad (20)$$

where,

$S_i$ is the negative score assigned to the $i^{th}$ anomaly, $n$ is total number of anomalies detected in the batch, T is total number of leaves scanned in the batch. The scoring for each type of anomaly is defined as follows,
Moisture deviation: -2points
Pesticide Residues: -5 points
Early disease detection (Spectral): -3 points
Valid disease detection (dual confirmation): -6 points
Unwanted leaf-bud ratios: -3 points

These scoring assignments are provided as default values. These points can be customized by the factory based on operational priorities, quality standards, and production requirements. The default values serve as a guideline for initial implementation.

At step 210 of the method 200, one or more hardware processors 102 are configured to validate one or more final tea grades for a batch of processed tea, based on a Reinforcement Learning (RL) technique with a self-adaptive reward function. Unlike static rule-based validation approaches, the RL system optimizes process control by continuously learning from past grading outcomes. The reward function dynamically adjusts based on the flavor score, a user-defined target flavor profile, and a user-defined grade, ensuring adaptive optimization across different tea processing conditions. The flavor profile and grade targets used for reinforcement learning are factory-calibrated based on market demands, production strategy, and historical performance data. RL-based optimization is utilized for process parameter selection, including withering, rolling, oxidation, and drying, by leveraging both historical grading performance and real-time user feedback. The system continuously refines the manufacturing parameters to enhance flavor accuracy while maintaining desired physical grades. By integrating real-time grading outcomes into the RL decision-making loop, the system can preemptively adjust parameters to prevent deviations in flavor or consistency.

For this process, the input states is the user-defined target profile, the flavor score and the one or more feasible grades. The mathematical formulation of Markov Decision Process (MDP) remains the basis of the RL approach, allowing iterative improvements based on real-time batch processing data.

State $s_t$ is defined as,

$$s_t = M_{batch}, P_{batch}, D_{batch}, C_{batch}, TargetFlavorProfile, G_{current} \qquad (21)$$

where,

$M_{batch}$: Moisture level of the batch
$P_{batch}$: Pesticide residue level
$D_{batch}$: Disease severity index
$C_{batch}$: Chemical composition metrics
*TargetFlavorProfile*: Desired flavor characteristics
$G_{current}$: Current grade distribution from one or more feasible grades

Action $a_t$ is defined as,

$$a_t \in \{T_w, R_{roll}, T_o, T_d\} \qquad (22)$$

where,

$T_w$:Withering time
$R_{roll}$:Rolling intensity
$T_o$:Oxidation duration
$T_d$: Drying duration

The environment (tea process) moves from $s_t$ to $s_{t+1}$ after applying $a_t$, changing moisture levels, chemical transformations, etc.

Reward $r_t$ Incorporate the flavor score F, plus penalties for exceeding pesticide/disease thresholds, a bonus if the batch aligns with the user defined target flavor profile, and a grade alignment bonus:

$$r_t = \beta_1 . F + \beta_4 . G_{alignment} - \beta_2[max(0, P_{batch} - 1) + max(0, D_{batch} - \delta)] + \beta_3 . \delta(TargetFlavorProfile) \quad (23)$$

where,

- $F$ is the flavor score (including caffeine and tannins).
- $G_{alignment}$ measures the alignment between the achieved grades and user-confirmed grade targets.
- max (0, $P_{batch}$ - 1) penalizes pesticide levels above threshold (1.0).
- max (0, $D_{batch}$ - $\delta$) penalizes high disease severity beyond $\delta$.
- $\delta$(*TargetFlavorProfile*) is a bonus if the partial or final product meets the Target Flavor Profile.
- $\beta_1$, $\beta_2$, $\beta_3$, $\beta_4$ are weighting factors.

The RL algorithm (Q-learning, policy gradient, etc.) updates $\pi(a_t \vee s_t)$ to maximize the cumulative reward $\sum_{t=0}^{T} \gamma^t r_t$ .

The RL process starts with initialization with industry standards. The process begins by setting the withering time ($T_w$), rolling intensity ($R_{roll}$), oxidation duration ($T_o$), and drying duration ($T_d$) to establish industry or factory standard values for the initial batches. These standard parameters provide a baseline performance, ensuring that initial batches meet general quality and grade expectations. As initial batches are processed, the feasibility score, the flavor score, bitterness index value and the one or more feasible grades are collected. The RL agent uses the collected data to evaluate the performance of the current parameters against the desired flavor outcomes and grade targets. Based on the reward signals, the RL agent adjusts the process parameters ($T_w$, $R_{roll}$, $T_o$, $T_d$) to optimize for higher flavor scores and better grade feasibility. As production progresses, the RL agent continuously updates its policy using real-time insights, refining processing techniques to accommodate variations in leaf quality, environmental conditions, and batch-specific anomalies. The system adapts dynamically to optimize processing efficiency, compensating for fluctuations in raw material properties while ensuring consistency in final output. For final tea grade validation, the RL system aligns with existing factory sorting mechanisms, enabling automated classification into predefined physical grades. A reward function is generated based on the degree of match between the predicted flavor score and the user-defined target profile, while penalizing excessive anomalies exceeding predefined thresholds. At least one manufacturing parameter is adjusted per batch to further refine the process flow, ensuring long-term optimization of tea quality.

Examples of final tea grade outputs include: "30% BOP, 30% FBOP, 40% Dust" with automated reporting of downgrade discrepancies (e.g., excessive FOP-to-OP downgrades). Any observed inconsistencies trigger adaptive RL adjustments to rolling intensity, oxidation time, or other critical parameters, preventing recurrence of undesirable grading shifts. If multiple action policies yield equivalent reward estimates, the system applies a fallback selection strategy based on minimal energy use, historical success rates, or operator-specified process preferences.

For validating one or more final tea grades for the batch of processed tea, current factory sorting processes are used to classify the tea into different physical grades based on size, integrity, and other physical characteristics. Here the reward function proportional to a match between the flavor score and the user-defined target flavor profile is generated. Further the set of anomalies are penalized above a pre-defined threshold. Finally, at least one manufacturing parameter is adjusted based on the RL agent's policy to optimize the quality of the batch of tea leaves. Examples for the one or more final tea grades are "30% BOP, 30% FBOP, 40% Dust." Automated logging of any discrepancies (e.g. excessive downgrades from FOP to OP) is sent to the RL module, enabling it to adjust process parameters such as rolling intensity to prevent future issues. While the disclosed embodiments utilize reinforcement learning (e.g., Q-learning or policy gradient methods), other adaptive optimization techniques such as genetic algorithms, evolutionary strategies, or deep neural network-based controllers may be employed, provided they serve the same optimization goal.

The system 100 also calculates a total waste for the pre-defined time interval if the set of anomalies are detected in the waste management module. This is based on the count of batch of rejected tea leaves and an assessment of available factory infrastructure using extracted features. The process of waste management includes three steps. The first

step is the anomaly detection which is explained before. These are considered as the input data for total waste calculation which are rejected tea leaves, the set of anomalies identified using rejected tea leaves such as moisture deviations, pesticide residues, disease markers, improper leaf-bud ratios, and broken leaf fragments. The factory infrastructure contains factory resource data such as current waste management infrastructure (e.g., compost pits, anaerobic digesters, extraction units), factory sustainability targets and regulatory requirements, historical waste management records including processed counts, disposal or repurposing success rates, and ROI metrics. For total waste calculation, first the sub-grade tea leaves are labeled as "Rejected" and logged in the WasteDatabaseEntry as WasteDatabaseEntry ← (BatchID, AnomalyType, Count, Timestamp). The second step of waste management process is that the rejected tea leaves are again classified into sub-categories of waste types such as:

- Non-beverage-usable tea leaves suitable for industrial extractions.
- Bioenergy-ready tea leaves are appropriate for feeding digesters or boilers.
- Compost/disposal categories including contaminated or low-value waste for composting or safe disposal.

The third step of the waste management process includes matching waste types to available factory infrastructure such as compost pits, bioenergy plants, and chemical extraction units.

The system maps batch of rejected tea leaves having each waste type to an optimal re-purposing strategy, ensuring minimal waste and maximum resource utilization. Unlike conventional waste disposal methods that treat all rejected leaves uniformly, this system applies a dynamic classification model that considers both chemical properties and factory capabilities. The LLM-based interface evaluates the factory's available resources and infrastructure (e.g., digesters, compost pits, chemical extractors) to identify the most efficient resource and waste allocation. The system selects the optimal process for each waste stream (e.g., composting for high-moisture waste, chemical extraction for tannin-rich shoots). Also, the system guides the factory in directing waste streams to the most suitable resource, ensuring sustainability and Return on investment (ROI) goals are met. For example, the suggestions are,

- "For pesticide-laden waste, prioritize bioenergy production to minimize contamination risks."

- "For moisture-rich shoots, composting is more efficient than bioenergy conversion."

The LLM periodically analyzes historical data (e.g., compost yields, biogas efficiency) to recommend incremental changes to existing methods (e.g., optimizing compost aeration cycles, adjusting feedstock ratios) and highlight inefficiencies or underutilization (e.g., low-capacity chemical extractors). For example, the suggestions made by LLM are,

- "Increase compost aeration to reduce processing time by 15%."
- "Optimize feedstock moisture for biogas yield improvement."

While embodiments use large language models (LLMs) for evaluating factory infrastructure and recommending repurposing paths, equivalent approaches using transformer-based models, recurrent networks (e.g., RNN, LSTM), or any learning-based time series modeling techniques may be used, provided they serve the same functional goal.

The system continuously tracks return on investment (ROI) from historical data comprising resource usage, disposal costs, revenue, and a set of existing repurposing paths. To ensure decisions are based on statistically significant trends and operational maturity, the system schedules a comprehensive review every 1-2 years. This interval allows sufficient time for meaningful performance data to accumulate across multiple production cycles, seasonal variations, and changing market conditions. During this review, the LLM evaluates historical data to assess the feasibility of introducing new repurposing paths (e.g., biochar, bioplastics). If the ROI for a specific waste management strategy exceeds a user-defined threshold, the system recommends integrating a new repurposing path. For example, a suggestion will be "Based on historical data, tannin extraction from low-grade shoots could provide additional revenue. Consider piloting tannin extraction in Year 3."

To enhance system adaptability, insights from waste categorization and ROI trends are also fed back into the manufacturing optimization loop, allowing real-time process adjustments using the reinforcement learning (RL) framework. For instance, if consistent pesticide-laden waste is observed in specific leaf grades, the system may recommend modifying upstream parameters like withering or oxidation time to minimize such defects. Additionally, the repurposing engine accounts for factory-specific operational constraints, including energy capacity, processing limits, regulatory compliance, and infrastructure availability when generating recommendations. In cases where the existing infrastructure cannot accommodate a certain waste type, fallback options such as secure disposal or investment suggestions for new infrastructure are automatically triggered. This ensures the waste management subsystem remains not only sustainable but also operationally viable across varying factory scales and maturity levels.

Once the final tea grades are validated, at step 212 of the method 200, one or more hardware processors 102 are

configured to calculate a total worker compensation in the worker compensation module, by correlating the set of features, a set of anomalies comprising (i) a set of pre-informed anomalies, and (ii) a set of uninformed anomalies, detected from the set of features, and a set of scoring rules. In this step, workers are rewarded based on the count of tea shoots processed, incorporating quality metrics such as shoot type, leaf-bud ratio, moisture, fine vs. coarse ratio, and leaf integrity (full vs. broken leaves). For calculating the worker compensation, total counts of tea leaves processed per shift and quality metrics such as leaf type ratios, leaf-bud ratio, moisture levels, fine vs. coarse shoots ratio, shoot integrity: $I_{broken_w}$ or proportion of shoots broken under that worker's handling, missed anomalies ($A_w$) not flagged earlier are considered. the total count of usable (non-anomalous) tea leaves actually contributing to final production is represented as,

$$C_{usable} = C_{total} - Q_w - A_w \qquad (24)$$

Where, $C_{total}$ is the total count of tea leaves the worker handles, $Q_w$ is the count of pre-informed anomalies identified upstream (e.g., pesticide-laden or diseased shoots), $A_w$ is the count of uninformed anomalies discovered after the worker has processed the tea leaves (e.g., misclassified, broken leaves, missed disease). While the current compensation is computed using predefined scoring rules and dynamic anomaly weights, the system is adaptable to incorporate factory-specific pay scales, role-based policies, and AI-based incentive models in future implementations.

For calculating worker compensation, the set of pre-informed anomalies, and the set of uninformed anomalies are considered. The set of pre-informed anomalies ($Q_w$) as count are those leaves which are already flagged upstream (e.g., via sensors or pre-checks) before the worker handles them. The worker still processes them but is not penalized for their existence because they are beyond the worker's control. For example: If 20 shoots in a batch are pre-flagged for high pesticide residue, those 20 shoots are added to $Q_w$. The worker is compensated at the base rate for handling these leaves, but it does not reduce the worker's $C_{usable}$. The set of uninformed anomalies ($A_w$)are leaves which are not flagged upstream but discovered during or after the worker's handling (e.g., incorrectly identified broken shoots). The worker may be penalized for these anomalies. For example: Broken Leaves found in "Two leaf and Bud" shoot type. The set of uninformed Anomalies (Count) are detected post-worker handling and include errors in classification, segregation, or labeling. It is represented as,

$$A_w = A_{missed} + A_{integrity} \qquad (25)$$

where, $A_{missed}$ is the count of leaves carrying visible or spectral disease markers overlooked by the worker, $A_{integrity}$ is the count of broken leaves erroneously classified as intact. Missed Anomalies ($A_{missed}$) are those from visible markers (e.g., disease, discoloration), and is represented as,

$$A_{missed} = \sum_{i=1}^{n} \delta_{missed,i} \qquad (26)$$

where, $\delta_{missed,i}$ = 1, if the anomaly $i$ was missed, otherwise 0.

Shoot Integrity Errors ($A_{integrity}$) is derived based on leaf integrity metric ($I_{broken}$) and it is represented as,

$$A_{integrity} = \frac{N_{brokenmisclassified}}{N_{totalprocessed} \times m} \times C_{total} \qquad (27)$$

where,

$N_{brokenmisclassified}$ is the number of broken leaves collected by workers,
$N_{totalprocessed}$ is the total leaves processed by the worker,
$C_{total}$ is the total count of leaves processed by the worker,
m is the configurable parameter indicating the number of broken leaves treated as equivalent to one processed leaf.

For example, if m = 4, then every 4 broken leaves are grouped and treated as equivalent to 1 processed leaf. For $N_{brokenmisclassified}$ = 20, the grouped count is 5 equivalent leaves.

The set of pre-informed anomalies (Count) are anomalies flagged by upstream processes (e.g., sensors, initial classification systems) before worker handling. It is represented as,

$$Q_w = Q_{pesticide} + Q_{disease} + Q_{other} \qquad (28)$$

where,

$Q_{pesticide}$ is the count of leaves flagged for pesticide residue levels exceeding thresholds,
$Q_{disease}$ is the count of leaves flagged for visible or spectral disease markers,
$Q_{other}$ is the count of leaves flagged for other anomalies (e.g., moisture deviations, chemical anomalies).
Pesticide Residue Flags ($Q_{pesticide}$) are detected using spectral pesticide detection and is represented as,

$$Q_{pesticide} = \sum_{i=1}^{n} \delta_{pesticide,i} \quad (29)$$

where:

$\delta_{pesticide,i}$ = 1 if the residue level of shoot i exceeds the threshold, otherwise 0.
Disease Markers ($Q_{disease}$) is detected based on visible or early-stage spectral disease Detection and is represented as,

$$Q_{disease} = \sum_{i=1}^{n} \delta_{disease,i} \quad (30)$$

where,
$\delta_{disease,i}$ = 1 if shoot i is flagged as diseased.
Other Flags ($Q_{other}$) includes anomalies flagged for moisture deviations, chemical profiling, or structural damage and is represented as,

$$Q_{other} = \sum_{i=1}^{n} \delta_{other,i} \quad (31)$$

where,
$\delta_{other,i}$ = 1if shoot i is flagged for moisture, chemical, or structural anomalies.
The total count is represented by,

$$C_{total} = C_{usable} + A_w + Q_w \quad (32)$$

Where, $C_{usable}$ is the count of non-anomalous shoots that pass final checks.
The worker compensation is represented as,

$$Compensation_w = B \times \left(\frac{\sum_{i=1}^{n} W_i + Q_w}{100}\right) - min(\gamma_2 \times A_w, MaxPenalty) + \sum_{X \in \{FCR,ST,LB,M\}} S_X(w) \quad (33)$$

Where,

$B$ is Base Pay Rate (per 100 shoots),
$W_i$ is normalized weight of leaf i based on its class for $C_{usable}$, $\sum_{i=1}^{n} W_i$ is total weighted count of leaves processed for $C_{usable}$,
$C_{usable}$ is count of leaves successfully processed without anomalies (worker's effective "good output"),
$Q_w$ is count of pre-informed anomalies leaves, which the worker handled but for which they are not penalized,
$A_w$ is count of uninformed anomalies leaves discovered post-worker handling (penalty applies),
$\gamma_2$ is penalty weight for uninformed anomalies,
*MaxPenalty* is maximum penalty cap,
$S_X(w)$ is bonuses/penalties for meeting or missing thresholds in fine-coarse ratio (FCR), shoot type (ST), leaf-bud ratio (LB), and moisture (M).

The base pay for weighted usable and pre-informed shoots is represented as,

$$B \times \left(\frac{\sum_{i=1}^{n} W_i + Q_w}{100}\right) \quad (34)$$

This ensures the worker is compensated for the weighted count of leaves they process, including those anomalies they cannot control ($Q_w$), normalized per 100 leaves.

Penalty for Uninformed Anomalies is represented as,

$$-min\,(\gamma_2 \times A_w, MaxPenalty) \qquad (35)$$

This imposes a penalty proportional to the count of leaves the worker mishandled or misclassified, capped at MaxPenalty. Threshold-Based Bonuses or Penalties are represented as,

$$+\sum_{X\in\{FCR,ST,LB,M\}} S_X(w) \qquad (36)$$

This applies additional bonuses or penalties if the worker meets or misses specific quality metrics (e.g., FCR, ST, LB, M). Two-Threshold Piecewise for each metric X is given as,

$$S_X(w) =$$
$$\{+\beta_{X,bonus}, X_w > T_X^{+(if higher is better)}, -\beta_{X,penalty}, X_w < T_X^{-(if higher is better)}, 0, \qquad (37)$$

*otherwise*. where,

$\beta_{X,bonus}$ Bonus rate for metric *X*. (Assigned by Factory)
$\beta_{X,penalty}$ Penalty rate for metric *X*. (Assigned by Factory)
$T_X^+$ Bonus threshold for metric *X*. (Assigned by Factory)
$T_X^-$ Penalty threshold for metric *X*. (Assigned by Factory)

Table 1 below shows the leaf classes and assigned weights

Table 1

| Leaf Type | Assigned weight |
|---|---|
| One Leaf and Bud | 1.0 |
| Two Leaf and Bud | 1.5 |
| Three Leaf and Bud | 1.2 |
| Four Leaf and Bud | 1.1 |
| 1 Banji | 0.8 |
| 2 Banji | 0.9 |
| 3 Banji | 0.7 |
| 4 Banji | 0.6 |
| Single Leaf | 0.5 |

The penalty thresholds and bonus triggers used in compensation scoring-such as for fine-coarse ratio (FCR), shoot type (ST), leaf-bud ratio (LB), and moisture (M)-are factory-calibrated and may be adjusted based on product line and operational standards.

A practical example for calculating worker compensation is explained henceforth Suppose Worker A processes a total of $C_{total}$ = 200 leaves.

- Pre-informed anomalies ($Q_w$): $Q_w$ = 20 leaves.
- Uninformed anomalies ($A_w$ = 10 leaves).
- Assigned Weights:
  - Two Leaf and Bud: 50 shoots (Weight: 1.5)
  - One Leaf and Bud: 30 shoots (Weight: 1.0)

- 1 Banji: 40 leaves (Weight: 0.8)
- Single Leaf: 20 leaves (Weight: 0.5)

Calculated Weighted Counts:

$$\sum_{i=1}^{n} W_i = (1.5\times50)+(1.0\times30)+(0.8\times40)+(0.5\times20) = 75+30+32+10 = 147$$

- Base Pay Rate: B = INR50 per 100 leaves.
- Penalty Weight: $\gamma2$ = INR2 per uninformed anomaly.
- Maximum Penalty Cap: MaxPenalty = INR15.
- Bonuses/Penalties:

  - $FCR_w > T_{FCR}^{+}: \beta_{FCR,bonus} = \text{INR}10$ .
  - $\text{STw} < T_{ST}^{+}:: \beta_{ST,Penalty} = \text{INR}5$ .

Calculations:

$$Compensation_w = 50 \times \left(\frac{147+20}{100}\right) - min(2 \times 10{,}15) + 10 - 5$$

$$50 \times 1.67 - min(20{,}15) + 5$$

$$83.5 - 15 + 5 = INR73.5$$

The outcome is Worker A earns INR73.5 for processing 200 shoots, considering the weighted count, penalties, and bonuses.

This example demonstrates how the compensation formula integrates shoot type weights, normalization, penalties, and bonuses to ensure fair and incentivized worker compensation. In extended implementations, additional metrics such as per-shift processing rate, anomaly detection accuracy, or worker skill level may be incorporated as multipliers or normalization factors in the compensation model.

To facilitate accurate compensation calculations, the system must categorize each processed shoot into one of the nine acceptable classes and apply the corresponding weight. The weighted count is then normalized per 100 shoots to determine the base compensation.

Normalization Example:

Worker B processes 300 leaves:

- One Leaf and Bud: 60 leaves (Weight: 1.0)
- Two Leaf and Bud: 80 leaves (Weight: 1.5)
- 1 Banji: 100 leaves (Weight: 0.8)
- Single Leaf: 60 leaves (Weight: 0.5)

Calculated Weighted Counts:

$$\sum_{i=1}^{n} W_i = (1.0\times60)+(1.5\times80)+(0.8\times100)+(0.5\times60) = 60+120+80+30 = 290$$

$$\text{Normalized Weighted Count} = 290/100 = 2.9$$

$$\text{Base Compensation} = 50 \times 2.9 = \text{INR}145$$

The system 100 consolidates real-time data across multiple subsystems into an interactive, centralized reporting dashboard. The dashboard aggregates and visualizes insights from classification, chemical profiling, manufacturing

optimizations, worker performance, and waste management, enabling data-driven operational oversight. The user interface (UI) is designed to be highly interactive, providing factory operators with actionable insights and intuitive visualizations. Unlike traditional static reporting systems, the UI integrates real-time feedback loops, allowing users to actively influence production decisions based on live anomaly detection and grading outcomes.
The dashboard consists of three primary components:

1. Real-time metrics display, which displays

- Live classification accuracy tracking, including pesticide and disease detection, shoot integrity assessment, and fine/coarse categorization.
- Worker performance indicators, showing bonus/penalty triggers and final compensation insights.
- Dynamic waste management analytics, including segregated waste counts, repurposing paths, and Waste Reduction Index (WRI) calculations.
- The reporting system highlights such as real-time waste segregation statistics, ROI trends for waste repurposing strategies, opportunities for cost reduction and efficiency gains.

2. Operational summaries and trend analysis which includes

- Daily, weekly, and monthly performance snapshots, detailing total production volumes, flavor consistency trends, and yield optimization insights.
- Rolling averages of key parameters, such as breakage rates, pesticide detection frequency, and moisture variance tracking.
- Comparative insights between historical data and current batch performance to ensure continuous process improvement.

3. Exception alerts and adaptive notifications which includes

- Automated alerts for pesticide or disease level spikes, ensuring immediate intervention to prevent contamination risks.
- Penalty threshold exceedance warnings, flagging persistent high worker misclassification rates or missed anomalies for corrective actions.
- Waste threshold breach notifications, triggering potential reinforcement learning (RL) parameter adjustments or factory policy modifications.

The system also features an intelligent feedback mechanism, enabling operators to override or refine AI-based classifications in real-time. Unlike conventional systems that rely on static AI outputs, this feedback loop allows expert workers to validate or adjust AI predictions, reinforcing continuous learning and improving long-term classification accuracy.

For instance, if the AI system incorrectly flags a batch of tea leaves as containing excessive moisture, an operator can manually review the assessment and provide corrective feedback. The RL module then incorporates this feedback into future process optimizations, ensuring adaptability to factory-specific conditions.

Additionally, the system provides an automated decision-support interface, offering real-time grading recommendations and batch-specific optimization suggestions. The interface enables:

- Live user interventions on process parameters such as withering time, oxidation, and drying, ensuring adaptive control over tea flavor and quality.
- Customizable factory-defined grading criteria, allowing refinements based on evolving product standards.
- Integration with existing factory management systems (FMS) to synchronize decision-making with broader production workflows.

Beyond immediate operational insights, the system periodically generates in-depth analytical reports for long-term strategic planning. These reports offer AI-driven recommendations on process enhancements, emerging waste trends, worker training needs, and predictive maintenance schedules for key machinery.

The UI also supports multi-level access, with tailored dashboards for different user roles (e.g., factory managers, quality control teams, sustainability officers, and workers). This ensures each stakeholder has access to the most relevant data while maintaining operational transparency and accountability.

The integration of a Large Language Model (LLM)-assisted query interface allows users to interact with the system using natural language queries. Operators can ask questions such as:

- "What is the current leaf integrity ratio for today's batch?"
- "How does this batch compare to last week's production in terms of pesticide residue?"
- "What are the recommended parameter adjustments to improve flavor consistency?"

This LLM-driven interface enhances usability by eliminating the need for manual data searches, allowing operators to retrieve critical insights instantly.

The system 100 is designed to be scalable, supporting future enhancements such as mobile UI access, voice-command capabilities, and AI-driven anomaly explanation features. These additions will further streamline tea production oversight, ensuring continuous alignment with industry advancements and evolving quality standards.

Further, the system 100 consolidates data such as the set of anomalies, the final grade, the feasibility score, the flavor score, with new worker compensation and waste management details on a reporting dashboard. This enable real-time analytics and strategic oversight for managers, regulators, and other stakeholders. The dashboard components are real time metrics, operational summaries, exception alerts and notifications. The real time metrics includes classification accuracy such as pesticide/disease detection, shoot integrity identification, fine/coarse status, worker performance such as bonus/penalty triggers, final compensation and waste metrics such as segregated counts, repurposing paths, waste reduction index. The operational summaries include daily/weekly/monthly snapshots such as total production, flavor consistency, yield improvement, trend analysis such as rolling averages of breakage rates, pesticide usage, moisture variance, etc. The exception alerts and notifications includes pesticide or disease spikes, penalty threshold exceedances for example persistent high $A_w$ or missed anomalies, waste surpassing targets such as possible RL parameter adjustments or policy changes.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps

or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor implemented method (200) comprising:

segmenting (202), via one or more hardware processors, a set of RGB images and a set of spectral images corresponding to a batch of tea leaves, captured via an RGB camera and a spectral camera for a pre-defined time interval, by applying

(i) a first segmentation technique on the set of RGB images to obtain a set of segmented RGB images, and
(ii) at least (a) a second segmentation technique on a set of histogram-equalized spectral images to obtain a first subset of segmented spectral images amongst a set of segmented spectral images and (b) a third segmentation technique on the set of histogram-equalized spectral images to obtain a second subset of segmented spectral images amongst the set of segmented spectral images;

extracting (204), via the one or more hardware processors, a set of features comprising (i) a set of morphological features by processing the set of segmented RGB images, and (ii) a set of spectral features by applying a spectral reflectance extraction technique and a dimensionality reduction technique on the set of segmented spectral images;
selecting (206), via the one or more hardware processors, one or more feasible grades amongst a set of predefined grades based on a feasibility score calculated using (i) the set of features and (ii) a set of shoot classes relevant to tea manufacturing;
determining (208), via the one or more hardware processors, a flavor score for the one or more feasible grades based on (i) a set of flavor compounds, and (ii) a bitterness index calculated using one or more flavor compounds amongst the set of flavor compounds;
validating (210), via the one or more hardware processors, one or more final tea grades for a batch of processed tea, based on a Reinforcement Learning (RL) technique with a reward function, wherein the reward function is based on the flavor score, a user-defined target flavor profile, and a user defined grade; and
calculating (212), via the one or more hardware processors, a total worker compensation by correlating the set of features, a set of anomalies comprising (i) a set of pre-informed anomalies, and (ii) a set of uninformed anomalies, detected from the set of features, and a set of scoring rules.

**2.** The processor implemented method as claimed in claim 1, wherein a segmented spectral image amongst the second subset of segmented spectral images is obtained by segmenting a spectral image amongst the set of spectral images using the third segmentation technique by,

performing, via the one or more hardware processors, an initial k-means clustering on a histogram-equalized spectral image corresponding to the spectral image to obtain a segmented mask of leaf region;
applying, via the one or more hardware processors, a circular mask on center of the segmented mask of leaf region to eliminate noisy edge distortion, wherein a radius of the circular mask is calculated based on noisy edge identified after the initial k-means clustering;
reapplying, via the one or more hardware processors, the circular mask on the histogram-equalized spectral image while discarding the segmented mask of leaf region to obtain a clean histogram-equalized spectral image; and
performing, via the one or more hardware processors, convolutional neural network (CNN)-based segmentation on the clean histogram-equalized spectral image to obtain the segmented spectral image amongst the second subset of segmented spectral images.

**3.** The processor implemented method as claimed in claim 1, further comprising identifying, a set of disease symptoms from the set of segmented spectral images based on (i) a similarity metric and (ii) comparison between the set of segmented RGB images, and the set of segmented spectral images, by,

identifying, via the one or more hardware processors, a first set of discrepancies indicating a set of hidden diseases using a similarity metric by comparing the first subset of segmented spectral images and the second subset of segmented spectral images;
identifying, via the one or more hardware processors, a second set of discrepancies indicating a set of confirmed diseases using the similarity metric by comparing the set of segmented RGB images and the second subset of segmented spectral images; and
identifying, via the one or more hardware processors, the set of disease symptoms by comparing the first set of discrepancies and the second set of discrepancies to determine severity of diseases.

**4.** The processor implemented method as claimed in claim 1,

wherein the set of morphological features comprises a set of shoot types, a leaf count, a bud count, a set of shoot classes, and a set of disease markers,
wherein the set of spectral features comprises chemical data, moisture percentage, and reflectance value of spectral disease markers, and
wherein the set of anomalies comprises a moisture deviation, a pesticide residue, a disease marker, an unwanted leaf-bud ratio, and broken leaf fragments, are detected from the batch of tea leaves using the set of features based on a normalized negative score comparison with a pre-defined threshold.

**5.** The processor implemented method as claimed in claim 4,

wherein the normalized negative score for the set of anomalies in the batch of tea leaves is computed by:

assigning, via the one or more hardware processors, a pre-defined negative score for each anomaly amongst the set of anomalies;
calculating, via the one or more hardware processors, a total negative score for the set of anomalies by performing a summation of the pre-defined negative score for each anomaly;
obtaining, via the one or more hardware processors, the normalized negative score by dividing the total negative score by the leaf count; and
determining, via the one or more hardware processors, a count of batch of rejected tea leaves by comparing the normalized negative score with the pre-defined threshold, and

wherein, if the set of anomalies are detected, a total waste for the pre-defined time interval is calculated based on the count of batch of rejected tea leaves and a factory infrastructure identified using the set of features, by:

classifying, via the one or more hardware processors, the batch of rejected tea leaves to at least one anomaly amongst the set of anomalies;
mapping, via the one or more hardware processors, the at least one anomaly to a repurposing path of the factory infrastructure;
calculating, via the one or more hardware processors, return on investment (ROI) from historical data comprising resource usage, disposal costs and revenue and a set of existing repurposing paths; and
suggesting, via the one or more hardware processors, if the ROI is greater than the user defined ROI threshold, a new repurposing path for the mapped repurposing path to calculate the total waste.

**6.** The processor implemented method as claimed in claim 1, wherein the feasibility score for a grade amongst the set of grades is calculated based on a leaf integrity match, a tip criterion match, a fine coarse match, a pesticide residue level in the batch of tea leaves, a disease severity index in the batch of tea leaves and a set of weighting factors, wherein

the leaf integrity match represents a value of one if the leaf integrity of the batch of tea leaves exceeds a pre-defined threshold,
the tip criterion match represents a value of one if the bud ratio of the batch of tea leaves is sufficient for a flowery grade, and
the fine coarse match represents a value of one if the set of shoot classes aligns with a set of requirements of the grade.

**7.** The processor implemented method as claimed in claim 1, wherein validating a final tea grade for each leaf based on the RL technique comprises:

generating, via the one or more hardware processors, the reward function proportional to a match between the flavor score and the user-defined target flavor profile;
penalizing, via the one or more hardware processors, the set of anomalies above a pre-defined threshold; and
adjusting, via the one or more hardware processors, at least one manufacturing parameter based on the RL agent's policy to optimize quality of the batch of tea leaves.

**8.** A system (100), comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

segment a set of RGB images and a set of spectral images corresponding to a batch of tea leaves, captured via an RGB camera and a spectral camera for a pre-defined time interval, by applying

(i) a first segmentation technique on the set of RGB images to obtain a set of segmented RGB images, and
(ii) at least (a) a second segmentation technique on a set of histogram-equalized spectral images to obtain a first subset of segmented spectral images amongst a set of segmented spectral images and (b) a third segmentation technique on the set of histogram-equalized spectral images to obtain a second subset of segmented spectral images amongst the set of segmented spectral images;

extract a set of features comprising (i) a set of morphological features by processing the set of segmented RGB images, and (ii) a set of spectral features by applying a spectral reflectance extraction technique and a dimensionality reduction technique on the set of segmented spectral images;
select one or more feasible grades amongst a set of predefined grades based on a feasibility score calculated using (i) the set of features and (ii) a set of shoot classes relevant to tea manufacturing;
determine a flavor score for the one or more feasible grades based on (i) a set of flavor compounds, and (ii) a bitterness index calculated using one or more flavor compounds amongst the set of flavor compounds;
validate one or more final tea grades for a batch of processed tea, based on a Reinforcement Learning (RL) technique with a reward function, wherein the reward function is based on the flavor score, a user-defined target flavor profile, and a user defined grade; and
calculate a total worker compensation by correlating the set of features, a set of anomalies comprising (i) a set of pre-informed anomalies, and (ii) a set of uninformed anomalies, detected from the set of features, and a set of scoring rules.

**9.** The system as claimed in claim 8, wherein a segmented spectral image amongst the second subset of segmented spectral images is obtained by segmenting a spectral image amongst the set of spectral images using the third segmentation technique by,

performing an initial k-means clustering on a histogram-equalized spectral image corresponding to the spectral image to obtain a segmented mask of leaf region;
applying a circular mask on center of the segmented mask of leaf region to eliminate noisy edge distortion, wherein a radius of the circular mask is calculated based on noisy edge identified after the initial k-means clustering;
reapplying the circular mask on the histogram-equalized spectral image while discarding the segmented mask of leaf region to obtain a clean histogram-equalized spectral image; and
performing convolutional neural network (CNN) -based segmentation on the clean histogram-equalized spectral image to obtain the segmented spectral image amongst the second subset of segmented spectral images.

**10.** The system as claimed in claim 8, wherein the one or more hardware processors are further configured to identify, a set of disease symptoms from the set of segmented spectral images based on (i) a similarity metric and (ii) comparison between the set of segmented RGB images, and the set of segmented spectral images, by,

identifying a first set of discrepancies indicating a set of hidden diseases using a similarity metric by comparing the first subset of segmented spectral images and the second subset of segmented spectral images;
identifying a second set of discrepancies indicating a set of confirmed diseases using the similarity metric by

comparing the set of segmented RGB images and the second subset of segmented spectral images; and
identifying the set of disease symptoms by comparing the first set of discrepancies and the second set of discrepancies to determine severity of diseases.

**11.** The system as claimed in claim 8,

wherein the set of morphological features comprises a set of shoot types, a leaf count, a bud count, a set of shoot classes, and a set of disease markers,
wherein the set of spectral features comprising chemical data, moisture percentage, and reflectance value of spectral disease markers, and
wherein the set of anomalies comprises a moisture deviation, a pesticide residue, a disease marker, an unwanted leaf-bud ratio, and broken leaf fragments, are detected from the batch of tea leaves using the set of features based on a normalized negative score comparison with a pre-defined threshold.

**12.** The system as claimed in claim 11,
wherein the normalized negative score for the set of anomalies in the batch of tea leaves is computed by,

assigning a pre-defined negative score for each anomaly amongst the set of anomalies;
calculating a total negative score for the set of anomalies by performing a summation of the pre-defined negative score for each anomaly;
obtaining the normalized negative score by dividing the total negative score by the leaf count; and
determining a count of batch of rejected tea leaves by comparing the normalized negative score with the pre-defined threshold, and

wherein, if the set of anomalies are detected, a total waste for the predefined time interval is calculated based on the count of batch of rejected tea leaves and a factory infrastructure identified using the set of features, by:

classifying the batch of rejected tea leaves to at least one anomaly amongst the set of anomalies;
mapping the at least one anomaly to a repurposing path of the factory infrastructure;
calculating return on investment (ROI) from historical data comprising resource usage, disposal costs and revenue and a set of existing repurposing paths; and
suggesting if the ROI is greater than the user defined ROI threshold, a new repurposing path for the mapped repurposing path to calculate the total waste.

**13.** The system as claimed in claim 8, wherein the feasibility score for a grade amongst the set of grades is calculated based on a leaf integrity match, a tip criterion match, a fine coarse match, a pesticide residue level in the batch of tea leaves, a disease severity index in the batch of tea leaves and a set of weighting factors, wherein

the leaf integrity match represents a value of one if the leaf integrity of the batch of tea leaves exceeds a pre-defined threshold,
the tip criterion match represents a value of one if the bud ratio of the batch of tea leaves is sufficient for a flowery grade, and
the fine coarse match represents a value of one if the set of shoot classes aligns with a set of requirements of the grade.

**14.** The system as claimed in claim 8, wherein validating a final tea grade for each leaf based on the RL technique comprises,

generating the reward function proportional to a match between the flavor score and the user-defined target flavor profile;
penalizing the set of anomalies above a pre-defined threshold; and
adjusting at least one manufacturing parameter based on the RL agent's policy to optimize quality of the batch of tea leaves.

**15.** One or more non-transitory machine-readable information storage mediums comprising one or more instructions which when executed by one or more hardware processors cause:

segmenting a set of RGB images and a set of spectral images corresponding to a batch of tea leaves, captured via

an RGB camera and a spectral camera for a pre-defined time interval, by applying

(iii) a first segmentation technique on the set of RGB images to obtain a set of segmented RGB images, and
(iv) at least (a) a second segmentation technique on a set of histogram-equalized spectral images to obtain a first subset of segmented spectral images amongst a set of segmented spectral images and (b) a third segmentation technique on the set of histogram-equalized spectral images to obtain a second subset of segmented spectral images amongst the set of segmented spectral images;

extracting a set of features further comprising (i) a set of morphological features by processing the set of segmented RGB images, and (ii) a set of spectral features by applying a spectral reflectance extraction technique and a dimensionality reduction technique on the set of segmented spectral images;
selecting one or more feasible grades amongst a set of predefined grades based on a feasibility score calculated using (i) the set of features and (ii) a set of shoot classes relevant to tea manufacturing;
determining a flavor score for the one or more feasible grades based on (i) a set of flavor compounds, and (ii) a bitterness index calculated using one or more flavor compounds amongst the set of flavor compounds;
validating one or more final tea grades for a batch of processed tea, based on a Reinforcement Learning (RL) technique with a reward function, wherein the reward function is based on the flavor score, a user-defined target flavor profile, and a user defined grade; and
calculating a total worker compensation by correlating the set of features, a set of anomalies further comprising (i) a set of pre-informed anomalies, and (ii) a set of uninformed anomalies, detected from the set of features, and a set of scoring rules.

SYSTEM 100
HARDWARE PROCESSOR(S) 102
MEMORY 104
DATABASE 108
I/O INTERFACE(S) 106

FIG. 1

200

Segmenting a set of RGB images and a set of spectral images corresponding to a batch of tea leaves, to obtain a set of segmented RGB images and a set of segmented spectral images

202

Extracting a set of features comprising (i) a set of morphological features by processing the set of segmented RGB images, and (ii) a set of spectral features by applying a spectral reflectance extraction technique and a dimensionality reduction technique on the set of segmented spectral images

204

Selecting, via the one or more hardware processors, one or more feasible grades amongst a set of predefined grades based on a feasibility score calculated using (i) the set of features and (ii) a set of shoot classes relevant to tea manufacturing

206

Determining a flavor score for the one or more feasible grades based on (i) a set of flavor compounds, and (ii) a bitterness index calculated using one or more flavor compounds amongst the set of flavor compounds

208

Validating one or more final tea grades for a batch of processed-tea leaves, based on a Reinforcement Learning (RL) technique with a reward function, wherein the reward function is based on the flavor score, a pre-defined target flavor profile, and a user defined grade

210

Calculating a total worker compensation by correlating the set of features, a set of anomalies comprising (i) a set of pre-informed anomalies, and (ii) a set of uninformed anomalies, detected from the set of features, and a set of scoring rules

212

FIG. 2

FIG. 3A

FIG. 3B

FIG. 3C

FIG. 3D

FIG. 3E

FIG. 4A

FIG. 4B

FIG. 4C

FIG. 4D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202521030839